# EUROPEAN PATENT SPECIFICATION

(11) **EP 3 087 847 B1**
(45) Date of publication and mention of the grant of the patent: **13.11.2019**
(21) Application number: 14875127.4
(22) Date of filing: 24.12.2014
(51) Int. Cl.: A23G 1/00, A23D 9/007, A23G 1/30, A23D 9/04, A23G 1/36

(54) **METHOD FOR MANUFACTURING WATER-CONTAINING HEAT-RESISTANT CHOCOLATE, METHOD FOR SUPPRESSING INCREASE IN VISCOSITY OF WATER-CONTAINING CHOCOLATE DOUGH, AND METHOD FOR FORMING SACCHARIDE SKELETON IN WATER-CONTAINING HEAT-RESISTANT CHOCOLATE**
VERFAHREN ZUR HERSTELLUNG VON WASSERHALTIGER WÄRMEBESTÄNDIGER SCHOKOLADE, VERFAHREN ZUR UNTERDRÜCKUNG DES ANSTIEGS DER VISKOSITÄT VON WASSERHALTIGEM SCHOKOLADENTEIG UND VERFAHREN ZUR HERSTELLUNG EINES SACCHARIDSKELETTS IN WASSERHALTIGER WÄRMEBESTÄNDIGER SCHOKOLADE
PROCÉDÉ DE PRODUCTION DE CHOCOLAT CONTENANT DE L'EAU ET RÉSISTANT À LA CHALEUR, PROCÉDÉ DE SUPPRESSION DE L'AUGMENTATION DE LA VISCOSITÉ DE LA PÂTE DE CHOCOLAT CONTENANT DE L'EAU, ET PROCÉDÉ DE FORMATION DE SQUELETTE DE SACCHARIDE DANS LE CHOCOLAT CONTENANT DE L'EAU ET RÉSISTANT À LA CHALEUR

(30) Priority: 27.12.2013 JP 2013271287
(43) Date of publication of application: 02.11.2016
(73) Proprietor: The Nisshin OilliO Group, Ltd., Tokyo 104-8285 (JP)
(72) Inventor: OONISHI, Kiyomi, Yokosuka-shi Kanagawa 239-0832 (JP); HACHIYA, Iwao, Yokosuka-shi Kanagawa 239-0832 (JP)
(74) Representative: KATZAROV S.A.
(86) International application number: PCT/JP2014/084085
(87) International publication number: WO 2015/098932

(56) References cited:
- EP-A1- 0 496 310
- EP-A1- 1 673 977
- EP-A1- 2 319 329
- EP-A1- 2 622 966
- EP-A2- 0 256 762
- EP-A2- 0 768 038
- JP-A- 2000 139 352
- JP-A- 2001 045 974
- JP-A- 2005 080 597
- JP-A- 2008 206 490
- JP-A- 2011 152 080
- JP-A- 2013 074 820
- JP-A- 2013 162 791
- US-B1- 6 391 356
- HACHIYA I ET AL: "SEEDING EFFECTS ON SOLIDIFICATION BEHAVIOR OF COCOA BUTTER AND DARK CHOCOLATE. II. PHYSICAL PROPERTIES OF DARK CHOCOLATE", JOURNAL OF THE AMERICAN OIL CHEMISTS' SOCIETY (JAOCS), SPRINGER, DE, vol. 66, no. 12, 1 December 1989 (1989-12-01), pages 1763-1770, XP002037818, ISSN: 0003-021X, DOI: 10.1007/BF02660744
- SIREE CHAISERI ET AL: "Lipid and hardness characteristics of cocoa butters from different geographic regions", JOURNAL OF THE AMERICAN OIL CHEMISTS' SOCIETY (JA, SPRINGER, DE, vol. 66, no. 12, 1 December 1989 (1989-12-01), pages 1771-1776, XP008178871, ISSN: 0003-021X, DOI: 10.1007/BF02660745
- SHOICHI YANAGIHARA: 'Shokuyo Kokei Yushi' KABUSHIKI KAISHA KENPAKUSHA 1975, pages 304 - 305, XP008184027

## Description

### TECHNICAL FIELD

The present invention relates to a method for manufacturing a water-containing heat-resistant chocolate, a method for suppressing an increase in viscosity of a water-containing chocolate mix, and a method for forming a saccharide skeleton in a water-containing heat-resistant chocolate.

### BACKGROUND ART

Culture of eating chocolate has been developed in Europe because of its cool climate, and now chocolate has spread in all countries and regions around the world. Generally, the fat used for chocolate production is only cocoa butter provided from cocoa beans. A heat-resistant temperature of cocoa butter is about 31°C, so that chocolate melt under hot environments leads to deterioration of quality. Therefore, there is a need for chocolate to have heat resistance (hereinafter referred to as "heat-resistant chocolate") in hot regions such as equatorial regions.

The method for providing heat resistance to chocolate is adding a small amount of water to chocolate mix. Heat resistance and shape retention of chocolate are improved by forming a saccharide skeleton. The chocolate obtained by this method is referred to as "water-containing heat-resistant chocolate", hereinafter.

Meanwhile, in the manufacture of a water-containing heat-resistant chocolate, when water is added to a chocolate mix in a molten state before molding, the viscosity of a chocolate mix significantly increases, thus causing drastic deterioration of handle ability in a molding step of chocolate. To solve such a problem, there have been various methods proposed such as a method in which an increase in viscosity is delayed by using an emulsifier, a method in which an increase in viscosity is delayed by using egg white merengue (see Patent Document 1), and a method in which a chocolate mix having viscosity increased by the addition of water is forcibly molded by a pressure pusher (see Patent Document 2).
Patent Document 1: European Patent Application, Publication No.0297054
Patent Document 2: Pamphlet of PCT International Publication No. WO2013/083641

EP2622966 discloses a method of producing chocolate using a beta type XOX crystal.

### DISCLOSURE OF THE INVENTION

### Problems to be Solved by the Invention

However, it was difficult in ordinary methods, to maintain a mix of a water-containing heat-resistant chocolate in a molten state before molding at a suitable viscosity level for the manufacture for a long time.

An object of the present invention is to suppress an increase in viscosity of a mix of a water-containing heat-resistant chocolate in a molten state before molding in the manufacture of the water-containing heat-resistant chocolate.

### Means for Solving the Problems

The present inventors have intensively studied and found that the aforementioned problem can be solved by adding a specific seeding agent and water in a high temperature range where crystallization of an oil and fat in chocolate mix does not occur, specifically, 32 to 40°C, thus completing the present invention.

The present invention is strictly defined by the claims.

### Effects of the Invention

According to the present invention, there is a method provided for suppressing an increase in viscosity of a mix of a water-containing heat-resistant chocolate in a molten state before molding in the manufacture of the water-containing heat-resistant chocolate.

### PREFERRED MODE FOR CARRYING OUT THE INVENTION

Embodiments of the present invention will be described in detail below. The present invention is not limited to the following embodiments.

The manufacturing method of the present invention includes a seeding agent addition step of adding a seeding agent containing at least a β-form XOX crystal to a chocolate mix in a molten state, and a water addition step of adding water.

wherein X represents a saturated fatty acid having 18-22 carbon atoms, O represents oleic acid, and XOX represents triacylglycerol in which oleic acid is bonded to the 2-position of glycerol, and X is bonded to the 1- and 3-positions.

### (Chocolate Mix)

"Chocolate mix" in the present invention means liquid chocolate obtained through pulverization and conching of chocolate raw materials, which is in a stage before being subjected to cooling solidification to give the final solid chocolate.

The chocolate mix "in a molten state" in the present invention means a chocolate mix obtained by melting oil and fat in the chocolate mix. It is possible to judge whether or not a chocolate mix is in a molten state by confirming release of the chocolate from the mold after subjecting the chocolate mix to cooling solidification. When the chocolate mix subjected to cooling solidification does not release from the mold (specifically, when the amount of a chocolate released from the mold is less than 70%), the chocolate mix is judged as a molten liquid.

"Oil-and-fat in a chocolate mix" in the present invention does not mean only an oil and fat such as cocoa butter, but means the total of all of oils and fats contained in the raw materials of the chocolate mix, such as cacao mass, cocoa powder, and whole milk powder. For example, generally, the content of oil and fat (cocoa butter) of cacao mass is 55% by mass, the content of oil and fat (cocoa butter) of cocoa powder is 11% by mass and the content of oil and fat (milk fat) of whole milk powder is 25% by mass, so that the content of oil and fat in a chocolate mix is a value obtained by multiplying the mixing amount (% by mass) in the chocolate mix of each raw material by the oil content to give the product, and summing the respective product thus obtained.

The chocolate mix in a molten state before seeding in the present invention is preferably a tempered type so as to efficiently gain the effects of seeding. Namely, an SOS type triacylglycerol (hereinafter sometimes abbreviated to SOS) is preferably contained in oil and fat contained in the chocolate mix. Here, the SOS type triacylglycerol is triacylglycerol in which a saturated fatty acid (S) is bonded to the 1- and 3-positions of a glycerol skeleton and oleic acid (O) is bonded to the 2-position. The saturated fatty acid (S) is preferably a saturated fatty acid having 16 or more carbon atoms, more preferably a saturated fatty acid having 16-22 carbon atoms, and still more preferably a saturated fatty acid having 16-18 carbon atoms. SOS content of oil and fat contained in a chocolate mix in a molten state before seeding (namely, before the below-mentioned seeding agent addition step) of the present invention is preferably in a range of 40 to 90% by mass, more preferably 50 to 90% by mass, and still more preferably 60 to 90% by mass.

Regarding the chocolate mix in a molten state before seeding in the present invention, 1, 3-distearoyl-2-oleoylglycerol (StOSt) is preferably contained in oil and fat of the chocolate mix, as a part or all of SOS, so as to obtain the effect of seeding more efficiently. StOSt content of oil and fat contained in a chocolate mix in a molten state before seeding of the present invention is preferably in a range of 24 to 70% by mass, more preferably 26 to 70% by mass, still more preferably 27 to 60% by mass, and most preferably 30 to 55% by mass. The StOSt content preferably falls in the above range since the effect of seeding is obtained more efficiently without impairing melt-in-the-mouth of the chocolate. When the StOSt content in a chocolate mix falls in the above range, not only sufficient heat resistance is imparted to the chocolate obtained after cooling solidification of the mix (namely, sticky tactile sensation is suppressed when handling chocolate), but also the thus obtained chocolate can exhibit good melt-in-the-mouth and bloom resistance.

Regarding a chocolate mix containing 24 to 70% by mass of StOSt in oil and fat contained in the chocolate mix, a chocolate mix containing a desired amount of StOSt in oil and fat can be prepared by using the below-mentioned cacao butter equivalent containing StOSt.

### [Seeding Agent Addition Step]

The seeding agent addition step in the present invention corresponds to so-called seeding. Seeding step is a step in which, using a seeding agent serving as crystal nuclei of a stable crystal, crystal nuclei of the stable crystal are generated in a chocolate mix in a molten state to thereby solidify oil and fat in chocolate as a V-type stable crystal, thus accelerating tempering. The stable crystal in the seeding agent serves as crystal nuclei by cooling the chocolate mix to a temperature lower than the melting point of oil and fat in the chocolate mix, thus accelerating formation of a stable crystal and crystal growth in the oil and fat in the chocolate mix.

The temperature of the chocolate mix in the seeding agent addition step is in a range of 32 to 40°C. This temperature is higher than the usual temperature (about 30°C) in the seeding method, and is equal to or lower than a melting point of a β-form XOX crystal. By retaining the temperature of the chocolate mix in a range of 32 to 40°C, an increase in viscosity of the chocolate mix can be suppressed and also a low-melting oil and fat component other than the β-form XOX crystal contained in the below-mentioned seeding agent is melted, so that the β-form XOX crystal is likely to be uniformly dispersed in the chocolate mix, thus obtaining stable seeding effect.

The temperature of the chocolate mix in the seeding agent addition step is preferably in a range of 34 to 39°C, more preferably 35 to 39°C, and most preferably 37 to 39°C. When the chocolate mix in the seeding agent addition step has a high temperature, seeding can be efficiently performed by increasing the addition amount of the below-mentioned seeding agent containing at least a β-form XOX crystal. The above temperature in the seeding agent addition step refers to a temperature at which the above seeding agent is added to the chocolate mix.

### (β-Form XOX Crystal)

A β-form XOX crystal used in the chocolate mix in a molten state, which has been subjected to seeding, of the present invention is judged by a diffraction peak obtained by the measurement of X-ray diffraction (powder method). In the determination of a short spacing of an oil and fat crystal at 2θ in a range of 17 to 26 degrees by X-ray diffraction, when a strong diffraction peak corresponding to a spacing of 4.5 to 4.7Å is detected and a diffraction peak corresponding to a spacing of 4.1 to 4.3Å and a diffraction peak corresponding to a spacing of 3.8 to 3.9Å is not detected or is very weak, the oil and fat crystal is judged to be a β form crystal. Further, in the determination of a long spacing of an oil and fat crystal at 2θ being from 0 to 8 degrees, when a strong diffraction peak corresponding to 60 to 65Å is detected, the oil and fat crystal is judged to be in a triple-chain length structure in the case of 1, 3-distearoyl-2-oleoylglycerol (hereinafter also referred to as StOSt) crystal. When a strong diffraction peak corresponding to 70 to 75Å is detected, the oil and fat crystal is judged to be in a triple-chain length structure in the case of 1, 3-dibehenyl-2-oleoylglycerol (hereinafter also referred to as BOB).

In the β-form XOX crystal which is used in the chocolate mix in the present invention, the ratio of the intensity of the X-ray diffraction peak corresponding to a spacing of 4.1 to 4.3Å (G'), which is obtained at a temperature of 20°C or lower (preferably 0 to 20°C, and more preferably 10°C), to the intensity of the diffraction peak corresponding to a spacing of 4.5 to 4.7Å (G), namely G'/G, is preferably in a range of 0 to 0.3, more preferably 0 to 0.2, and still more preferably 0 to 0.1. When the intensity ratio of the X-ray diffraction peaks is in the above-mentioned range, the β form XOX crystal functions effectively as a seeding agent.

### (β-Form XOX Crystal and Seeding Agent)

To the chocolate mix in the present invention, a seeding agent containing at least a β-form XOX crystal is added in the above-mentioned seeding agent addition step. The seeding agent in the present invention is composed of a β-form XOX crystal, or may be those containing, in addition to a β-form XOX crystal, other oils and fats (sunflower oil, palm olein, etc.), solid components (saccharides, milk powder, etc.), and the like. The amount of the β-form XOX crystal in the seeding agent is preferably 10% by mass or more, more preferably 30% by mass or more, from a viewpoint of easily obtaining the effect of seeding. The upper limit of the amount of the β-form XOX crystal in the seeding agent is not particularly limited, but is preferably 100% by mass or less. From a viewpoint of enhancing handling properties of the chocolate mix and dispersibility in the chocolate mix, the upper limit is preferably 50% by mass or less.

The β-form XOX crystal in the present invention is preferably a β-form BOB crystal and/or a β-form StOSt crystal from a viewpoint of easily obtaining the effects of the present invention and easily utilizing industrially. From the viewpoint of improving melt-in-the-mouth, the β-form XOX crystal in the present invention is particularly preferred to be a β-form StOSt crystal.

### (Method for Preparing β-Form XOX Crystal and Seeding Agent)

The β-form XOX crystal in the present invention can be prepared from an oil and fat containing XOX. Namely, the β-form XOX crystal can be prepared directly from an XOX-containing oil and fat, or by mixing an XOX-containing oil and fat with other oils and fats (sunflower oil, palm olein, etc.).

When XOX is StOSt, the oil and fat containing StOSt includes, for example, raw oils and fats of the cacao butter equivalent, such as sal fat, shea fat, Moller fat, mango kernel oil, Allanblackia fat, and pentadesma fat, as well as a high-melting fraction or a middle-melting fraction obtained by fractioning them. The oil and fat containing StOSt may be an oil and fat obtained, according to a known method, by transesterifying a mixture of high-oleic sunflower oil and ethyl stearate using a lipase preparation with selectivity for 1- and 3-positions, followed by removal of fatty acid ethyl esters from the reactant by distillation, and the high-melting fraction or middle-melting fraction obtained by fractioning it.

When XOX is BOB, the oil and fat may be an oil and fat obtained, according to a known method, by transesterifying a mixture of high-oleic sunflower oil and ethyl behenate using a lipase preparation with selectivity for 1- and 3-positions, followed by removal of fatty acid ethyl esters from the reactant by distillation, and the high-melting fraction or middle-melting fraction obtained by fractioning it.

The XOX content of the oil and fat containing XOX is preferably 40% by mass or more, more preferably 50% by mass or more, and still more preferably 60 to 90% by mass, relative to the oil and fat containing XOX. It is preferred that the XOX content in the oil and fat containing XOX is in the above range, since it is easy to adjust the XOX content of the seeding agent.

In the preparation of a β-form XOX crystal from the oil and fat containing XOX, when the XOX content in the oil and fat is low (for example, less than 40% by mass in the oil and fat), a seeding agent containing the β-form XOX crystal in a paste state or plastic state is obtained by heating the oil and fat to melt an oil and fat crystal, and then performing quick cooling crystallization using a quick cooling kneader such as Onlator, Kombinator, or Votator, followed by tempering at about 27 to 37°C for about 1 day.

When the XOX content in the oil and fat is high (for example, 40% by mass or more in the oil and fat), the oil and fat can be used to prepare the aggregated β-form XOX crystal by heating the oil and fat to melt into oil and fat crystals; cooling down to about 30°C; adding a seeding agent containing a β-form XOX crystal in a paste state prepared, for example, as mentioned above; performing partial crystallization until the total becomes a slurry while maintaining the temperature at about 30°C; casting into a resin mold, etc.; further solidifying at 28 to 30°C; and aging appropriately to stabilize the crystal. The oil and fat containing the thus-prepared aggregated β-form XOX crystal is pulverized appropriately, preventing the oil and fat crystal from melting (for example, in a circumstance where a temperature is -20°C or lower) and the resulting oil and fat can be used as a seeding agent in a powder form.

The seeding agent containing the β-form XOX crystal used in the chocolate mix in the present invention is preferably in a state of powder. The average particle size of the powder is preferably in a range of 10 to 140 µm.

In order to improve dispersibility of the powder, the powder may be mixed with a powder of solid bodies such as saccharides, starch, and milk solids (preferably the powder with an average particle size of 10 to 140 µm) to prepare an oil and fat composition, which may be used as the seeding agent containing the β-form XOX crystal in the present invention. In order to improve dispersibility, the powder may be dispersed at about 30°C in cocoa butter or a cacao butter equivalent in a molten state to prepare a slurry, which may be used as the seeding agent containing the β-form XOX crystal in the present invention.

Another aspect for preparing the β-form XOX crystal from an oil and fat containing XOX, for instance, the oil an fat containing XOX is mixed with powder in a solid state such as saccharides, starch, and milk solids, etc. and the grain size is controlled using a roll refiner, etc. as required, and then tempering is performed so as to prepare an oil and fat composition, which may be used as the β-form XOX crystal in the present invention.

Whether or not the seeding agent prepared from the above-mentioned oil and fat containing XOX can be used as the β-form XOX crystal can be judged by determining the X-ray diffraction of the oil and fat constituting the seeding agent in a similar manner to the above. When judged as a β-form crystal from the measurement results of X-ray diffraction, the content of XOX of the oil and fat in the seeding agent is handled as the content of the β-form XOX crystal in the oil and fat.

### (Addition Amount of β-Form XOX Crystal)

The amount of a β-form XOX crystal to be added to the chocolate mix in a molten state in the seeding agent addition step is preferably in a range of 0.1 to 15% by mass, more preferably 0.2 to 8% by mass, and most preferably 0.3 to 3% by mass, relative to the oils and fats in the chocolate mix in a molten state. When the addition amount of the β-form XOX crystal is in the above range, stable seeding effect can be expected even if the temperature of the chocolate mix is high (for example, 32 to 40°C) or, further, the chocolate mix is held under such a high temperature. When the β-form XOX crystal is a β-form StOSt crystal, the amount of the crystal is preferably in a range of 0.1 to 5.0% by mass, and more preferably 0.2 to 4.0% by mass, relative to the oils and fats in the chocolate mix in a molten state. When the β-form XOX crystal is a β-form BOB crystal, the amount of the crystal is preferably in a range of 2.0 to 10% by mass, and more preferably 4.0 to 8.0% by mass, relative to the oils and fats in the chocolate mix in a molten state.

After the β-form XOX crystal is added to the chocolate mix, the β-form XOX crystal may be uniformly dispersed in the chocolate mix by stirring or the like.

### [Water Addition Step]

The temperature of a chocolate mix in a water addition step is the same as that in the seeding agent addition step. The amount of water to be added in the water addition step may be the amount used in a conventional water-containing heat-resistant chocolate and is not particularly limited, and may be in a range of 0.1 to 5.0% by mass relative to the chocolate mix in a molten state. When the addition amount of water is 0.1% by mass or more relative to the chocolate mix in a molten state, a saccharide skeleton is sufficiently formed to gain a water-containing heat-resistant chocolate having excellent shape retention. When the addition amount of water is 5.0% by mass or less relative to the chocolate mix in a molten state, it is possible to suppress a risk of microbial contamination. The additional amount of water may be in a range of 0.3 to 3.0% by mass, and 0.4 to 2.5% by mass, relative to the chocolate mix in a molten state.

Water to be added in the water addition step may be either water alone, or a composition containing components other than water, together with water (hereinafter such a composition is referred to as a "water-containing material").

Even if the additional amount of water to be added in the water addition step is the same, the viscosity increase rate of the chocolate mix can vary depending on the component to be added together with water. Specifically, when only water or a water-containing material having high moisture content (juice, milk, etc.) is added, the viscosity of the chocolate mix is likely to quickly increase. Meanwhile, when the water-containing material such as a sugar solution or a protein solution is added, the viscosity tends to increase, comparatively slowly. When the viscosity quickly increases, there is a possibility that water cannot be sufficiently dispersed in the chocolate mix, so the water in the water addition step is preferably a water-containing material, and preferably in particular a sugar solution or a protein solution.

Examples of the sugar solution include solutions of a reduced starch and a high fructose corn syrup, containing water and saccharides such as fructose, glucose, sucrose, maltose, and oligosaccharide. Examples of the protein solution include solutions containing water and proteins such as egg white merengue, condensed milk, and fresh cream. The content of moisture in the sugar solution and the protein solution may be in a range of 10 to 90% by mass, or 10 to 50% by mass, relative to the entire solution.

When water is added in the form of a water-containing material in the water addition step, water may be added so that the amount of water is in the above range relative to the chocolate mix in a molten state.

The temperature of water or water-containing material to be used in the water addition step is not particularly limited, but is preferably the same as that of the chocolate mix in a molten state, to which water or water-containing material is to be added, in view of keeping the temperature of the chocolate mix at a given temperature and uniformly dispersing water or water-containing material with ease.

After adding water to the chocolate mix, water may be uniformly dispersed in the chocolate mix through stirring.

The manufacturing method of the present invention includes a seeding agent addition step and a water addition step, and these steps may also be reversed in the order of implementation. The seeding agent addition step and the water addition step may be simultaneously performed (namely, the seeding agent and water may be simultaneously added to the chocolate mix in a molten state).

### [Holding Step]

The temperature of the chocolate mix in a molten state in the present invention may be held at 32 to 40°C, preferably 34 to 39°C, more preferably 35 to 39°C, and most preferably 37 to 39°C, for 10 minutes or more after the seeding agent addition step and the water addition step. Whereby, the temperature of water dispersed in chocolate is raised and affinity of water with sugar or lactose to be dispersed in chocolate is enhanced. Tthereby enable acceleration of formation of a saccharide skeleton, thus making it possible to improve shape retention of chocolate while effectively suppressing an increase in viscosity of the chocolate mix.

The time period for which the chocolate mix is held at 32 to 40°C in the holding step is preferably in a range of 0.25 to 24 hours, more preferably 0.5 to 12 hours, and most preferably 1 to 8 hours. When the holding time period is within the afore-mentioned range, the viscosity of the chocolate mix after the seeding agent addition step and the water addition step can be suppressed to 1.10 times or less (more preferably 1.15 times or less) of the viscosity of the chocolate mix at the time of completion of both steps in a state where the seeding effect and the water addition effect are maintained. Therefore, handling of the chocolate mix becomes easier when foods are coated with the chocolate mix using an enrober. The viscosity of the chocolate mix after the seeding agent addition step and the water addition step, and the viscosity of the chocolate mix after the holding step are measured under the same temperature conditions and compared to each other.

The viscosity of the chocolate mix in the present invention can be determined as a plastic viscosity obtained by using, for example, a BH type viscometer, which is a rotary viscometer, rotating a rotor of No. 6 at 4 rpm at a measuring temperature, and multiplying the reading value after three rotations by the device coefficient.

### [Cooling Solidification Step]

The chocolate mix obtained after the seeding agent addition step and the water addition step may be cooled and solidified, whereby, chocolate can be prepared from chocolate mix efficiently.

There is no particular limitation on the method for cooling solidification, and the food product can be cooled and solidified by, for example, blowing cool air using a cooling tunnel and contact with a cooling plate, depending on properties of chocolate products, such as mold-molding and coating onto foods (see, for example, "Seikayo Yushi Handobukku (Confectionary Fats Handbook)", translated by Iwao Hachiya, 2010, Saiwai Shobo Co., Ltd.).

There is no particular limitation on the conditions of cooling solidification, as long as a chocolate mix is solidified, and cooling solidification may be performed at 0 to 20°C, preferably 0 to 10°C, for 5 to 90 minutes, preferably 10 to 60 minutes.

### (Chocolate)

In the present invention, "chocolate" is not limited by "Fair Competition Codes concerning labeling on chocolates" (Fair Trade Council of the Chocolate Manufacturing Industry) or legal provisions, and refers to those, which contain edible oils and fats as well as saccharides as main raw materials, and optionally contain a cacao component (including cacao mass and cocoa powder), dairy products, a flavor, an emulsifier, and the like, and which are manufactured through a part or all of the steps for manufacturing chocolate (mixing step, refining step, conching step, tempering, molding step, cooling step, etc.). The chocolate in the present invention also includes white chocolate and colored chocolate, in addition to dark chocolate and milk chocolate.

The content of oil and fat contained in the chocolate in the present invention (which indicates the total of all the oils and fats contained in the chocolate, similarly to the definition of "oil and fat in the chocolate mix" mentioned above) is preferably in a range of 30 to 46% by mass, more preferably 31 to 42% by mass, and most preferably 32 to 38% by mass, from a viewpoint of workability and flavor.

The content of oil and fat exerts a large influence on properties of viscosity since a continuous phase of chocolate is formed from the oil and fat. As the content of the oil and fat increases, the viscosity decreases, thus reducing an influence of an increase in viscosity due to the addition of water. However, the proportion of sugar decreases leads to a brittle saccharide skeleton structure, and thus heat resistance of the thus obtained chocolate is likely to deteriorate. Meanwhile, when the content of the oil and fat is about 30% by mass, influence of an increase in viscosity due to the addition of water is largely exerted, so the viscosity of the chocolate mix increases. And the increased viscosity of the chocolate mix deteriorates handle ability at the time of manufacture. Deterioration of handle ability can be suppressed by mixing emulsifiers having a viscosity decreasing effect (lecithin, polyglycerol condensed ricinoleic acid ester (PGPR), etc.) in chocolate to thereby appropriately adjust the viscosity. The content of the emulsifier having the viscosity decreasing effect in chocolate is preferably in a range of 0.2 to 1% by mass. It is preferred to use, as the emulsifier, lecithin in combination with PGPR. Lecithin and PGPR are preferably used in combination in a mass ratio of 4:6 to 8:2.

The chocolate mix and chocolate in the present invention may contain, in addition to oils and fats, cacao mass, cocoa powder, saccharides, dairy products (milk solids, etc.), an emulsifier, a flavor, a pigment, and the like which are usually used in the chocolate, as well as food modifiers such as starches, gums, heat-aggregating protein, and various powders. Of these, saccharides contribute to formation of a saccharide skeleton due to the addition of water in the chocolate mix. Examples of the saccharide include sugar (sucrose), lactose, glucose, maltose, oligosaccharide, fructooligosaccharide, soybean oligosaccharide, galactooligosaccharide, lactosucrose, palatinose oligosaccharide, enzymatically saccharified starch, saccharified reduced starch, isomerized glucose syrup, sucrose linked starch, honey, reducing sugar polydextrose, raffinose, lactulose, reduced lactose, sorbitol, xylose, xylitol, maltitol, erythritol, mannitol, trehalose, and the like, and the saccharide may also be sugar alcohol. The chocolate mix and chocolate in the present invention preferably contains saccharides in the amount in a range of 10 to 70% by mass, more preferably 20 to 65% by mass, and still more preferably 30 to 60% by mass.

The chocolate mix and chocolate can be manufactured by mixing raw materials, refining by roll refining, and a conching treatment as required, according to the ordinary method. The chocolate mix in a state where an oil and fat crystal has completely melted by heating in the conching treatment can be used as the chocolate mix in the present invention. Heating in the conching treatment is preferably performed at 40 to 60°C so as to not impair flavor of the chocolate.

It is possible to directly eat a chocolate after subjecting the water-containing heat-resistant chocolate obtained by the manufacturing method in the present invention to the above-mentioned steps, followed by releasing from mold. The chocolate of the present invention can be used in, for example, confectionery products and bread products (for example, breads, cakes, Western confectionary, bakes sweets, doughnuts, cream puffs, etc.) as coating or filling or by mixing into dough as a chip, whereby, a variety of chocolate composite food products (food products including chocolate in a part of raw materials) can be obtained.

### [Heat-Retaining Step]

It is preferred that the manufacturing method of the present invention further includes a heat-retaining step of subjecting the chocolate after the cooling solidification to a heat-retaining treatment. The heat-retaining treatment is a treatment of retaining the chocolate after cooling solidification at a temperature in a range of preferably 24 to 36°C, more preferably 26°C to 34°C, and more preferably 28 to 32°C, for preferably 1 hour to 14 days, more preferably 6 hours to 10 days, still more preferably 6 hours to 8 days, and most preferably 12 hours to 4 days. The heat-retaining treatment makes a saccharide skeleton formed in the chocolate stronger. The chocolate after the cooling solidification, which is to be subjected to the heat-retaining treatment, is preferably subjected to an aging treatment at a temperature in a range of preferably 16 to 24°C, and more preferably 18 to 22°C, for preferably 6 hours to 14 days, more preferably 6 hours to 10 days, still more preferably for 12 hours to 4 days, after the cooling solidification and before the heat-retaining treatment.

Heat resistance of the thus obtained water-containing heat-resistant chocolate is evaluated in accordance with the method of Examples mentioned below. Whether or not a saccharide skeleton is formed in the thus obtained water-containing heat-resistant chocolate is specified by confirming that a shape of the chocolate is retained for at least 20 minutes by performing a test of dipping in n-hexane mentioned in Examples below. In the test of dipping in n-hexane, the shape of the chocolate of the present invention is preferably retained for 2 hours or more, more preferably 12 hours or more, and still more preferably 24 hours or more.

### EXAMPLES

The present invention will be more specifically described below by way of Examples.

Each content of triacylglycerol in oil and fat, X-ray diffraction, and viscosity of a chocolate mix at each temperature were determined by the following methods.

### (Triacylglycerol Content)

Each content of triacylglycerol was measured by gas chromatography. Symmetry of triacylglycerol was measured by silver ion column chromatography.

### (Measurement of X-Ray Diffraction)

X-ray diffraction of oil and fat was measured under the conditions of an output of 1.6 kW, an operation angle of 0.96 to 30.0°, and a measuring speed of 2°/min, using an X-ray diffraction diffractometer UltimaIV (manufactured by Rigaku Corporation), and using CuKα (λ = 1.542Å) as a radiation source, and a filter for Cu.

### (Viscosity of Chocolate Mix)

Using a BH type viscometer (manufactured by TOKI SANGYO CO., LTD.), the viscosity of a chocolate mix was determined by rotating a rotor of No. 6 at 4 rpm, and multiplying the reading value after three rotations by the device coefficient (2500).

### [Preparation of StOSt-Containing Oil-and-Fat]

According to a known method, 60 parts by mass of ethyl stearate were mixed with 40 parts by mass of high oleic sunflower oil and a lipase preparation with selectivity for 1- and 3-positions were added to thereby perform transesterification. The lipase preparation was removed by a filtration treatment and the obtained reactants were subjected to thin film distillation to remove fatty acid ethyl esters from the reactants, thus obtaining a distillation residue. The obtained distillation residue was subjected to dry fractionation to remove a high-melting fraction. The obtained low-melting fraction was subjected to second stage fraction by acetone fractionation to obtain a middle-melting fraction. The thus obtained middle-melting point fraction was subjected to acetone removal, depigmentation, and deodorization treatments by ordinary methods to obtain a StOSt-containing oil and fat having StOSt content of 67.3% by mass.

### [Preparation of β-Form StOSt Crystal (Seeding Agent)-I]

According to the method mentioned below, a seeding agent A and a seeding agent B, each being an oil and fat containing a β-form StOSt crystal, were obtained. The crystal form of the thus obtained seeding agents and the contents of the β-form StOSt crystal are summarized in Table 1.

### (Seeding Agent A)

After mixing 75 parts by mass of high oleic sunflower oil with 25 parts by mass of an StOSt-containing oil and fat (StOSt content: 67.3% by mass), an oil and fat crystal was completely melted at 60°C, and then quick cooling crystallization was performed by Onlator, followed by tempering at 27°C for 1 day to obtain a seeding agent A in a paste state.

### (Seeding Agent B)

After mixing 45 parts by mass of high-oleic sunflower oil with 55 parts by mass of a StOSt-containing oil and fat (StOSt content: 67.3% by mass), an oil and fat crystal was completely melted at 60°C, and then quick cooling crystallization was performed by Onlator, followed by tempering at 34°C for 1 day to obtain a seeding agent B in a plastic state.

**[Table 1]**

| Table 1. Properties of seeding agent | | |
|---|---|---|
| Seeding agent | A | B |
| Shape | Paste state | Plastic state |
| Intensity ratio of diffraction peak (G'/G) | 0 | 0 |
| Oil and fat crystal form | Triple-chain length structure β-form | Triple-chain length structure β-form |
| β-form StOSt crystal content | 16.8% by mass | 37.0% by mass |

### [Manufacture and Evaluation of Chocolate-1]

### (Comparative Example 1)

According to the formulation in Table 2, raw materials were mixed and then subjected to roll refining and conching by ordinary methods to prepare a chocolate mix A having a temperature of 30°C in a molten state (oil and fat content of the chocolate mix: 37.5% by mass). To the chocolate mix A, a high fructose corn syrup (moisture content: 25% by mass) was added in an amount of 8% by mass (2% by mass as water relative to the chocolate mix) and, after dispersion with stirring, a seeding agent A was added in an amount of 0.35% by mass relative to the cholate mix (0.16% by mass as a β form StOSt crystal relative to the oil and fat in the chocolate mix in a molten state), followed by holding at 30°C while stirring.

### (Comparative Example 2)

According to the formulation in Table 2, raw materials were mixed and then subjected to roll refining and conching by ordinary methods to prepare a chocolate mix B having a temperature of 36°C in a molten state (oil and fat content of the chocolate mix: 37.5% by mass). To the mix B, a seeding agent B was added in an amount of 0.35% by mass relative to the cholate mix (0.35% by mass as a β-form StOSt crystal relative to the oil and fat in the chocolate mix in a molten state), followed by holding at 36°C while stirring. Water is not added to the chocolate mix of the present Example.

### (Example 1)

According to the formulation in Table 2, raw materials were mixed and then subjected to roll refining and conching by ordinary methods to prepare a chocolate mix B having a temperature of 36°C in a molten state (oil and fat content of the chocolate mix: 37.5% by mass). To the chocolate mix B, a high fructose corn syrup (moisture content: 25% by mass) was added in an amount of 8% by mass (2% by mass as water relative to the chocolate mix) and, after dispersion with stirring, a seeding agent B was added in an amount of 0.35% by mass relative to the cholate mix (0.35% by mass as the β form StOSt crystal relative to the oils and fats in the chocolate mix in a molten state), followed by holding at 36°C while stirring.

**[Table 2]**

| Table 2. Formulations of chocolate mixs A and B | | Unit: % by mass |
|---|---|---|
| | Chocolate mix A | Chocolate mix B |
| Cacao mass | 37.8 | 37.8 |
| Cocoa butter | 16.71 | 11.8 |
| StOSt-containing oil and fat | - | 4.91 |
| Powdered sugar | 44.94 | 44.94 |
| Lecithin | 0.5 | 0.5 |
| Flavor | 0.05 | 0.05 |
| Total | 100.0 | 100.0 |
| Oil and fat content | 37.5 | 37.5 |
| SOS content in oil and fat | 84.4 | 83.8 |
| StOSt content in oil and fat | 29.1 | 34.1 |

### (Measurement of Viscosity)

Regarding the chocolate mixes of Comparative Examples 1 and 2, and Example 1 mentioned above, viscosity immediately after preparation of the mix (viscosity before operation), viscosity after the addition of the water-containing material (viscosity after operation W), viscosity after the addition of the seeding agent (viscosity after operation S), and viscosity when maintaining at the temperature of 30°C in Comparative Example 1 or 36°C in Comparative Example 2 and Example 1 for 45 minutes or 90 minutes after the addition of the seeding agent (viscosity after 45 minutes or viscosity after 90 minutes) were respectively measured.

Immediately after the addition and dispersion of the high fructose corn syrup and the seeding agent, and holding at 30°C (Comparative Example 1) or 36°C (Comparative Example 2 and Example 1) for 90 minutes, the respective chocolate mixes were subjected to cooling solidification, and then releasing from mold and heat-resistant shape retention was evaluated according to criteria below. The results are shown in Table 3.

### (Evaluation of Releasing from Mold)

Immediately after the addition of the water-containing material and the seeding agent (immediately after operations W&S), or 90 minutes after the addition of the water-containing material and the seeding agent (after 90 minutes), a mold was filled with the chocolate mix, followed by cooling solidification at 10°C for 15 minutes and release from the mold. Releasing percentage at the time of releasing (percentage of chocolate which was released from the mold) was evaluated according to the following criteria.
A: very good (releasing percentage = 90% or more)
B: good (releasing percentage = 70% or more and less than 90%)
C: partially not released (releasing percentage = exceeding 0% and less than 70%)
D: impossible to be released (releasing percentage = 0%)

### (Evaluation of Heat-Resistant Shape Retention)

Regarding each chocolate obtained by the evaluation of releasing from mold, the chocolate released from the mold was stored at 20°C for a week and left to stand at 40°C for 2 hours, and then appearance was evaluated according to the following criteria.
A: no deformation, very good
B: almost no deformation, good
C: clear deformation

**[Table 3]**

| Table 3. Manufacturing conditions and evaluation results of chocolate | | | |
|---|---|---|---|
| | Comparative Example 1 | Comparative Example 2 | Example 1 |
| Chocolate mix | A | B | B |
| Chocolate mix temperature (°C) | 30 | 36 | 36 |
| Operation order*1 | W→S | S | W→S |
| Type of water-containing material | High fructose corn syrup | - | High fructose corn syrup |
| Addition amount of water (relative to mix: % by mass) | 2 | 0 | 2 |
| Seeding agent | A | B | B |
| Addition amount of β-form StOSt crystal (relative to oil and fat in mix: % by mass) | 0.16 | 0.35 | 0.35 |
| Viscosity before operation(mPa·s) | 28750(30°C) | 22500(36°C) | 26250(36°C) |
| Viscosity after operation W(mPa·s) | 55000(30°C) | Not measured | 51000(36°C) |
| Viscosity after operation S(mPa·s) | 62500(30°C) | 22500(36°C) | 56250(36°C) |
| Viscosity after 45 minutes(mPa·s) | 250000(30°C) or more | 22500(36°C) | 56250(36°C) |
| Viscosity after 90 minutes(mPa·s) | 250000 (30°C) or more | 22500(36°C) | 58000(36°C) |
| Releasing from mold(Immediately after operations W&S) | A | A | A |
| (After 90 minutes) | D | A | A |
| Heat-resistant shape retention(Immediately after operations W&S) | B | C | B |
| Heat-resistant shape retention(After 90 minutes) | C | C | B |
| *1: "Operation W" means an operation of adding a water-containing material, while "operation S" means an operation of adding a seeding agent. "W → S" means that a seedling agent was added after adding a water-containing material to a chocolate mix. | | | |

As is apparent from a comparison between Comparative Example 1 and Example 1, in the chocolate obtained by the manufacturing method of the present invention, an increase in viscosity of the chocolate mix was suppressed even by the addition of the water-containing material. Regarding the chocolate obtained by the manufacturing method of the present invention, both releasing from mold and heat-resistant shape retention were good.

### [Manufacture and Evaluation of Chocolate -2]

### (Example 2)

According to the formulation in Table 4, raw materials were mixed and then subjected to roll refining and conching by ordinary methods to prepare a chocolate mix C having a temperature of 37°C in a molten state (oil and fat content of the chocolate mix: 33.0% by mass). To the chocolate mix C, a seeding agent B was added in an amount of 0.45% by mass relative to the chocolate mix (0.5% by mass as a β-form StOSt crystal relative to the oil and fat in the chocolate mix in a molten state) and, after dispersion with stirring, egg white merengue (moisture content: 75% by mass: prepared by mixing 8 parts by mass of dried egg white with 17 parts by mass of granulated sugar, and adding water, followed by whisking) was added in an amount of 0.67% by mass (0.5% by mass as water relative to the chocolate mix), followed by holding at 37°C while stirring.

### (Example 3)

According to the formulation in Table 4, raw materials were mixed and then subjected to roll refining and conching by ordinary methods to prepare a chocolate mix C having a temperature of 37°C in a molten state (oil and fat content of the chocolate mix: 33.0% by mass). To the chocolate mix C, a seeding agent B was added in an amount of 0.45% by mass relative to the chocolate mix (0.5% by mass as a β-form StOSt crystal relative to the oil and fat in the chocolate mix in a molten state) and, after dispersion with stirring, egg white merengue (moisture content: 75% by mass: prepared by mixing 8 parts by mass of dried egg white with 17 parts by mass of granulated sugar, and adding water, followed by whisking) was added in an amount of 1.3% by mass (1% by mass as water relative to the chocolate mix), followed by holding at 37°C while stirring.

### (Example 4)

According to the formulation in Table 4, raw materials were mixed and then subjected to roll refining and conching by ordinary methods to prepare a chocolate mix C having a temperature of 37°C in a molten state (oil and fat content of the chocolate mix: 33.0% by mass). To the chocolate mix C, a seeding agent B was added in an amount of 0.45% by mass relative to the chocolate mix (0.5% by mass as a β-form StOSt crystal relative to the oil and fat in the chocolate mix in a molten state) and, after dispersion with stirring, a high fructose corn syrup (moisture content: 25% by mass) was added in an amount of 4% by mass (1% by mass as water relative to the chocolate mix), followed by holding at 37°C while stirring.

### (Example 5)

According to the formulation in Table 4, raw materials were mixed and then subjected to roll refining and conching by ordinary methods to prepare a chocolate mix D having a temperature of 37°C in a molten state (oil and fat content of the chocolate mix: 33.0% by mass). To the chocolate mix D, a high fructose corn syrup (moisture content: 25% by mass) was added in an amount of 4% by mass (1% by mass as water relative to the chocolate mix) and, after dispersion with stirring, a seeding agent B was added in an amount of 0.45% by mass relative to the chocolate mix (0.5% by mass as a β-form StOSt crystal relative to the oil and fat in the chocolate mix in a molten state), followed by holding at 37°C while stirring.

**[Tale 4]**

| Table 4. Formulation of chocolate mixes C and D | | |
|---|---|---|
| Unit: % by mass | | |
| | Chocolate mix C | Chocolate mix D |
| Cacao mass | 20.0 | 20.0 |
| Cocoa butter | 6.76 | 6.76 |
| StOSt-containing oil and fat | 11.49 | 11.49 |
| Whole milk powder | 15.0 | 15.0 |
| Powdered sugar | 46.3 | 46.3 |
| Lecithin | 0.4 | 0.27 |
| PGPR*1 | - | 0.13 |
| Flavor | 0.05 | 0.05 |
| Total | 100.0 | 100.0 |
| Oil and fat content | 33.0 | 33.0 |
| SOS content in oil and fat | 73.1 | 73.1 |
| StOSt content in oil and fat | 39.1 | 39.1 |
| *1: Polyglycerol condensed ricinoleic acid ester | | |
| (Trade name: Sunsoft No. 818SK as a product of Taiyo Kagaku Co., Ltd.) | | |

### (Measurement of Viscosity)

Regarding the chocolate mixes of Examples 2 to 5 mentioned above, viscosity immediately after preparation of the mix (viscosity before operation), viscosity after the addition of the seeding agent (viscosity after operation S), viscosity after the addition of a water-containing material (high fructose corn syrup or egg white merengue) (viscosity after operation W), and viscosity when maintaining at the temperature of 37°C after the addition of the seeding agent and the water-containing material for 45 minutes or 90 minutes (viscosity after 45 minutes or viscosity after 90 minutes) were respectively measured.

Immediately after the addition of the seeding agent and the water-containing material (high fructose corn syrup or egg white merengue), and holding at 37°C for 90 minutes, the respective chocolate mixes were loaded onto a mold and subjected to cooling solidification, and then releasing from mold and heat-resistant shape retention were evaluated according to criteria below. The results are shown in Table 5.

### (Evaluation of Releasing from Mold)

Releasing percentage after 15 minutes have passed since cooling solidification at 10°C (percentage of chocolate which is released from the mold) was evaluated according to the following criteria.
A: very good (releasing percentage = 90% or more)
B: good (releasing percentage = 70% or more and less than 90%)
C: partially not released (releasing percentage = exceeding 0% and less than 70%)
D: impossible to be released (releasing percentage = 0%)

### (Evaluation of Heat-Resistant Shape Retention)

Regarding each chocolate obtained by the evaluation of releasing from mold, the chocolate released from the mold was stored at 20°C for a week and left to stand at 50°C for 2 hours, and then appearance was evaluated according to the following criteria.
A: no deformation, very good
B: almost no deformation, good
C: clear deformation

**[Table 5]**

| Table 5. Manufacturing conditions and evaluation results of chocolate | | | | |
|---|---|---|---|---|
| | Example 2 | Example 3 | Example 4 | Example 5 |
| Chocolate mix | C | C | C | D |
| Chocolate mix temperature (°C) | 37 | 37 | 37 | 37 |
| Operation order*1 | S→W | S→W | S→W | W→S |
| Type of water-containing material | Egg white merengue | Egg white merengue | High fructose corn syrup | High fructose corn syrup |
| Addition amount of water (relative to mix: % by mass) | 0.5 | 1 | 1 | 1 |
| Seeding agent | B | B | B | B |
| β-form StOSt crystal content (relative to oil and fat in mix: % by mass) | 0.5 | 0.5 | 0.5 | 0.5 |
| Viscosity before operation(mPa·s) | 37500(37°C) | 37500(37°C) | 42500(37°C) | 19000(37°C) |
| Viscosity after operation S(mPa·s) | 37500(37°C) | 37500(37°C) | 42500(37°C) | 34000(37°C) |
| Viscosity after operation W(mPa·s) | 55750(37°C) | 97500(37°C) | 100250(37°C) | 34000(37°C) |
| Viscosity after 45 minutes(mPa·s) | 47000(37°C) | 85000(37°C) | 75000(37°C) | 35000(37°C) |
| Viscosity after 90 minutes(mPa·s) | 43250(37°C) | 77250(37°C) | 60500(37°C) | 37500(37°C) |
| Releasing from mold(Immediately after operations W&S) | A | A | A | A |
| Releasing from mold(After 90 minutes) | A | A | A | A |
| Heat-resistant shape retention(Immediately after operations W&S) | A | A | A | A |
| Heat-resistant shape retention(After 90 minutes) | A | A | A | A |
| *1: "Operation W" means an operation of adding a water-containing material, while "operation S" means an operation of adding a seeding agent. "S → W" means that a water-containing material was added after adding a seedling agent to a chocolate mix. "W → S" means that a seedling agent was added after adding a water-containing material to a chocolate mix. | | | | |

### [Confirmation of Effect of Heat-Retaining Step-1]

Immediately after completion of both operations S and W, chocolate mixes in Examples 3 and 5 were subjected to cooling solidification, and a part of the thus obtained chocolate was aged at 20°C for 2 days, and then subjected to a heat-retaining step at 28°C for 6 days. After the heat-retaining step and storage at 20°C, heat-resistant shape retention was evaluation in the following manner. The chocolate with a dash mark attached in Table 6(namely, Example 3' and Example 5') was obtained by aging chocolate prepared in the same manner as in the case of the chocolate with no dash mark attached (namely, Example 3 and Example 5) at 20°C for 2 days without being subjected to a heat-retaining step.

### (Evaluation Heat-Resistant Shape Retention: Measurement of Resistance to Stress under Load by Rheometer)

After raising a product temperature of each chocolate to 34°C by tempering, resistance to stress under load was measured by a rheometer. Using a rheometer CR-500DX (manufactured by Sun Scientific Co., Ltd.), resistance to stress under load (unit: g) was measured under the conditions of a table moving rate of 20 mm/min, a fixed depth of 3.0 mm, and a plunger diameter of 3 mm. The results are shown in Table 6. Larger numerical value of resistance to stress under load indicates that a network is more strongly formed by saccharide.

**[Table 6]**

| Table 6. Confirmation of effect of heat-retaining step-1 | | |
|---|---|---|
| Type of chocolate | Heat-retaining step | Resistance to stress under load(g) |
| Example 3 | Included | 312 |
| Example 3' | Not included | 75 |
| Example 5 | Included | 240 |
| Example 5' | Not included | 85 |

As shown in Table 6, when the heat-retaining step is performed, resistance to stress under load of the chocolate is enhanced (Examples 3 and 5), thus making a saccharide skeleton formed in the chocolate stronger.

### [Confirmation of Effect of Heat-Retaining Step-2]

Immediately after completion of both operations S and W, chocolate mixes in Examples 2 to 5 were subjected to cooling solidification, and a part of the thus gained chocolate was aged at 20°C for 2 days, and then each chocolate of Examples 2, 3, and 5 was subjected to a heat-retaining step at 28°C for 6 days. After the heat-retaining step, each chocolate was stored at 20°C. The chocolate from Example 4 was stored at 20°C without being subjected to a heat-retaining step. As a control, the chocolate stored at 20°C from Comparative Example 2 were used. Regarding each chocolate above, heat-resistant shape retention was evaluated in the following manner.

### (Evaluation of Heat-Resistant Shape Retention Evaluation: n-Hexane Dipping Test)

Each chocolate was placed on a rhombus stainless steel net in which the long interval was 16 mm and the short interval was 8 mm, and each intersection angle was 60° and 120°, followed by dipping in n-hexane at 20°C. Whether or not the extraction residue of the chocolate remained on the net with the lapse of time, and observation of a shape thereof for 48 hours were evaluated by the following criteria. The results are shown in Table 7. Better shape retention of the chocolate indicates that a network is more strongly formed by saccharide.
A: original shape is completely retained
B: partially collapsed, but original shape is retained
C: residue remains on net, but shape is collapsed
D: residue is completely dropped from net, and shape is completely collapsed

**[Table 7]**

| Table 7. Confirmation of effect of heat-retaining step-2 | | | | | |
|---|---|---|---|---|---|
| Chocolate | Addition amount of water (relative to mix: % by mass) | Heat-retaining step | Time of dipping in n-hexane | | |
| | | | After 20 minutes | After 2 hours | After 48 hours |
| Example 2 | 0.5 | Included | A | C | D |
| Example 3 | 1.0 | Included | A | A | A |
| Example 4 | 1.0 | Not included | A | C | D |
| Example 5 | 1.0 | Included | A | A | A |
| Comparative Example 2 | 0 | Not included | D | D | D |

As shown in Table 7, when the heat-retaining step is performed, it is easy to retain the shape of the chocolate for several hours even after dipping in n-hexane, thus making a network formed by saccharide stronger.

### [Preparation of BOB-Containing Oil and Fat]

According to a known method, 60 parts by mass of ethyl behenate were mixed with 40 parts by mass of high oleic sunflower oil and a lipase preparation with selectivity for 1- and 3-positions was added to thereby perform transesterification. The lipase preparation was removed by a filtration treatment and the gained reactants were subjected to thin film distillation to remove fatty acid ethyl esters from the reactants, thus obtaining a distillation residue. The gained distillation residue was subjected to dry fractionation to remove a high-melting fraction. The obtained low-melting fraction was subjected to second fraction, by acetone fractionation to obtain a middle-melting fraction. The thus gained middle-melting point fraction was subjected to acetone removal, depigmentation, and deodorization treatments by ordinary methods to obtain a BOB-containing oil and fat having BOB content of 65.0% by mass.

### [Preparation of β-Form BOB Crystal (Seeding Agent)-I]

According to the method mentioned below, a seeding agent C, which is an oil and fat containing a β-form BOB crystal, was obtained. The crystal form of the thus obtained seeding agent and the content of the β-form BOB crystal are summarized in Table 8.

### (Seeding Agent C)

After the BOB-containing oil and fat were completely melted, recrystallized by cooling to 20°C, after repeating 14 cycles, each cycle consisting of tempering at 30°C for 12 hours and 50°C for 12 hours, followed by pulverization at - 20°C and further sieving obtains a powdered BOB crystal having an average particle diameter of 100 µm. The crystal form of the BOB crystal was confirmed by X-ray diffraction. As a result, it has been confirmed that the crystal has a triple-chain length (diffraction line corresponding to 70 to 75Å) and is a β-form (very strong diffraction line corresponding to 4.5 to 4.7Å) crystal. The BOB crystal and powdered sugar were mixed in an equal amount to obtain a seeding agent C.

**[Table 8]**

| Table 8. Properties of seeding agent | |
|---|---|
| Seeding agent | C |
| Shape | Powder state |
| Intensity ratio of diffraction peak | 0 |
| (G'/G) | |
| Oil and fat crystal form | Triple-chain length structure β-form |
| β-form BOB crystal content | 32.5% by mass |

### [Manufacture and Evaluation of Chocolate-3]

### (Example 6)

According to the formulation in Table 9, raw materials were mixed and then subjected to roll refining and conching by ordinary methods to prepare a chocolate mix E having a temperature of 37°C in a molten state (oil and fat content of the chocolate mix: 35.0% by mass). To the chocolate mix E, a high fructose corn syrup (moisture content: 25% by mass) was added in an amount of 4% by mass (1% by mass as water relative to the chocolate mix) and, after dispersion with stirring, a seeding agent C was added in an amount of 5.4% by mass relative to the chocolate mix (5.0% by mass as a β-form BOB crystal relative to the oil and fat in the chocolate mix in a molten state), followed by holding at 37°C while stirring.

**[Table 9]**

| Table 9. Formulation of chocolate mix E | |
|---|---|
| Unit: % by mass | |
| | Chocolate mix E |
| Cacao mass | 20.0 |
| Cocoa butter | 8.23 |
| StOSt-containing oil and fat | 12.02 |
| Whole milk powder | 15.0 |
| Powdered sugar | 44.3 |
| Lecithin | 0.27 |
| PGPR*1 | 0.13 |
| Flavor | 0.05 |
| Total | 100.0 |
| Oil and fat content | 35.0 |
| SOS content in oil and fat | 73.8 |
| StOSt content in oil and fat | 39.1 |
| *1: Polyglycerol condensed ricinoleic acid ester | |
| (Trade name: Sunsoft No. 818SK as a product of Taiyo Kagaku Co., Ltd.) | |

### (Measurement of Viscosity)

Regarding the chocolate mix of Example 6 mentioned above, viscosity immediately after preparation of the mix (viscosity before operation), viscosity after the addition of the water containing agent (viscosity after operation W), viscosity after the addition of seeding agent (viscosity after operation S), and viscosity when maintaining a temperature of 37°C after the addition of the seeding agent for 45 minutes or 90 minutes (viscosity after 45 minutes or viscosity after 90 minutes) were respectively measured.

Immediately after the addition and dispersion of the high fructose corn syrup and the seeding agent (immediately after operations W&S), and holding at 37°C for 90 minutes (after 90 minutes), the respective chocolate mixes were loaded onto a mold and subjected to cooling solidification, and then releasing from the mold and heat-resistant shape retention was evaluated according to criteria below. The results are shown in Table 10.

### (Evaluation of Releasing from Mold)

Immediately after the addition of the water-containing material and the seeding agent (immediately after operations W&S), or 90 minutes after the addition of the water-containing material and the seeding agent (after 90 minutes), the chocolate mix was subjected to cooling solidification at 10°C for 15 minutes, and then releasing percentage (percentage of chocolate which were released from the mold) was evaluated according to the following criteria.
A: very good (releasing percentage = 90% or more)
B: good (releasing percentage = 70% or more and less than 90%)
C: partially not released (releasing percentage = exceeding 0% and less than 70%)
D: impossible to be released (releasing percentage = 0%)

### (Evaluation of Heat-Resistant Shape Retention-1)

Regarding each chocolate obtained by the evaluation of releasing from mold, the chocolate released from the mold was stored at 20°C for a week and left to stand at 50°C for 2 hours, and then appearance was evaluated according to the following criteria.
A: no deformation, very good
B: almost no deformation, good
C: clear deformation

### (Evaluation of Heat-Resistant Shape Retention-2)

Regarding each chocolate obtained by the evaluation of releasing from mold, the chocolate released from the mold was stored at 20°C for 7 days, and then subjected to a heat-retaining step at 28°C for 8 days. After the heat-retaining step, each chocolate was stored at 20°C. Each chocolate was placed on a rhombus stainless steel net in which the long interval was 16 mm and the short interval was 8 mm, and each intersection angle was 60° and 120°, followed by dipping in n-hexane at room temperature, the shape after 48 hours was evaluated by the following criteria.
A: original shape is completely retained
B: partially collapsed, but original shape is retained
C: residue remains on net, but shape is collapsed
D: residue is completely dropped from net, and shape is completely collapsed

**[Table 10]**

| Table 10. Manufacturing conditions and evaluation results of chocolate | |
|---|---|
| | Example 6 |
| Chocolate mix | E |
| Chocolate mix temperature (°C) | 37 |
| Operation order*1 | W→S |
| Type of water-containing material | High fructose corn syrup |
| Addition amount of water (relative to mix: % by mass) | 1 |
| Seeding agent | C |
| Addition amount of β-form BOB crystal (relative to oil and fat in mix: % by mass) | 5.0 |
| Viscosity before operation(mPa·s) | 12250(37°C) |
| Viscosity after operation W(mPa·s) | 18750(37°C) |
| Viscosity after operation S(mPa·s) | 29750(37°C) |
| Viscosity after 45 minutes(mPa·s) | 29500(37°C) |
| Viscosity after 90 minutes(mPa·s) | 29250(37°C) |
| Releasing from mold(Immediately after operations W&S) | A |
| Releasing from mold(After 90 minutes) | A |
| Heat-resistant shape retention 1(Immediately after operations W&S) | A |
| Heat-resistant shape retention 1(After 90 minutes) | A |
| Heat-resistant shape retention 2(Immediately after operations W&S) | A |
| Heat-resistant shape retention 2(After 90 minutes) | A |
| *1: "Operation W" means an operation of adding a water-containing material, while "operation S" means an operation of adding a seeding agent. "W → S" means that a seedling agent was added after adding a water-containing material to a chocolate mix. | |

### [Manufacture and Evaluation of Chocolate-4]

### (Example 7)

According to the formulation of the chocolate mix D in Table 4, raw materials were mixed and then subjected to roll refining and conching by ordinary methods to prepare a chocolate mix D having a temperature of 37°C in a molten state (oil and fat content of the chocolate mix: 33.0% by mass). To the chocolate mix D, a high fructose corn syrup (moisture content: 25% by mass) was added in an amount of 4% by mass (1% by mass as water relative to the chocolate mix) and, after dispersion with stirring, a seeding agent B was added in an amount of 0.9% by mass relative to the chocolate mix (1.0% by mass as a β-form StOSt crystal relative to the oil and fat in the chocolate mix in a molten state), followed by holding at 37°C while stirring.

### (Measurement of Viscosity)

Regarding the chocolate mix of Example 7, viscosity immediately after preparation of the mix (viscosity before operation), viscosity after the addition of the water-containing material (viscosity after operation W), viscosity after the addition of the seeding agent (viscosity after operation S), and viscosity when maintaining a temperature of 37°C for 10 minutes after the addition of the seeding agent (viscosity after 10 minutes) were respectively measured. The results are shown in Table 11.

### (Evaluation of Releasing from Mold)

Immediately after the addition of the water-containing material and the seeding agent (immediately after operations W&S), the chocolate mix was subjected to cooling solidification at 10°C for 15 minutes, and then releasing percentage (percentage of chocolate which is released from the mold) was evaluated in the same manner as in Example 6. The results are shown in Table 11.

### (Evaluation of Heat-Resistant Shape Retention-1: Measurement of Resistance to Stress under Load by Rheometer)

Regarding the chocolate obtained by evaluation of releasing from mold, the chocolate released from a mold was stored at 20°C for 1 day, and then subjected to a heat-retaining step at 28°C for 1, 2, or 3 day(s). After the heat-retaining step, the chocolate was stored at 20°C. Each chocolate was stored at 34°C for 2 hours, and then resistance to stress under load was measured by a rheometer. Using a rheometer, resistance to stress under load (unit: g) was measured in the same manner as in the aforementioned [Confirmation of Effect of Heat-Retaining Step-1]. The results are shown in Table 11.

### (Evaluation of Heat-Resistant Shape Retention 2: n-Hexane Dipping Test)

Regarding the chocolate obtained by evaluation of releasing from mold, the chocolate released from a mold was stored at 20°C for 1 day, and then subjected to a heat-retaining step at 28°C for 1, 2, or 3 day(s). After the heat-retaining step, the chocolate was stored at 20°C. Each chocolate was placed on a rhombus stainless steel net in which the long interval was 16 mm and the short interval was 8 mm, and each intersection angle was 60° and 120°, followed by dipping in n-hexane at room temperature, the shape after 48 hours was evaluated by the same criteria as in the aforementioned [Confirmation of Effect of Heat-Retaining Step-2]. The results are shown in Table 11.

**[Table 11]**

| Table 11. Manufacturing conditions and evaluation results of chocolate | | | |
|---|---|---|---|
| | Example 7 | | |
| Chocolate mix | D | | |
| Chocolate mix temperature (°C) | 37 | | |
| Operation order*1 | W→S | | |
| Type of water-containing material | High fructose corn syrup | | |
| Addition amount of water (relative to mix: % by mass) | 1 | | |
| Seeding agent | B | | |
| β-form StOSt crystal content (relative to oil and fat in mix: % by mass) | 1.0 | | |
| Viscosity before operation(mPa·s) | 12750(37°C) | | |
| Viscosity after operation W(mPa·s) | 29000(37°C) | | |
| Viscosity after operation S(mPa·s) | 31250(37°C) | | |
| Viscosity after 10 minutes(mPa·s) | 31250(37°C) | | |
| Releasing from mold(Immediately after operations W&S) | A | | |
| Period of storage at 28°C | 1 Day | 2 Days | 3 Days |
| Evaluation of heat-resistant shape retention 1(Unit:g) | 195 | 250 | 301 |
| Evaluation of heat-resistant shape retention 2 | A | A | A |
| *1: "Operation W" means an operation of adding a water-containing material, while "operation S" means an operation of adding a seeding agent. "W → S" means that a seedling agent was added after adding a water-containing material to a chocolate mix. | | | |

As shown in Table 11, heat-resistant shape retention of the chocolate could be more enhanced with the lapse of time by providing the heat-retaining step. It was estimated that the heat-retaining step makes the saccharide skeleton formed in the chocolate stronger.

### [Manufactured and Evaluation of Chocolate-5]

### (Example 8)

According to the formulation in Table 12, raw materials were mixed and then subjected to roll refining and conching by ordinary methods to prepare a chocolate mix F having a temperature of 34°C in a molten state (oil and fat content of the chocolate mix: 33.0% by mass). To the chocolate mix F, a high fructose corn syrup (moisture content: 25% by mass) was added in an amount of 4% by mass (1% by mass as water relative to the chocolate mix) and, after dispersion with stirring, a seeding agent B was added in an amount of 0.9% by mass relative to the cholate mix (1.0% by mass as the β form StOSt crystal relative to the oils and fats in the chocolate mix in a molten state), followed by holding at 34°C while stirring.

**[Table 12]**

| Table 12. Formulation of chocolate mix F | |
|---|---|
| Unit: % by mass | |
| | Chocolate mix F |
| Cacao mass | 20.0 |
| Cocoa butter | 18.25 |
| Whole milk powder | 15.0 |
| Skim milk powder | 2.0 |
| Powdered sugar | 44.3 |
| Lecithin | 0.27 |
| PGPR*1 | 0.13 |
| Flavor | 0.05 |
| Total | 100.0 |
| Oil and fat content | 33.0 |
| SOS content in oil and fat | 75.6 |
| StOSt content in oil and fat | 25.8 |
| *1: Polyglycerol condensed ricinoleic acid ester | |
| (Trade name: Sunsoft No. 818SK as a product of Taiyo Kagaku Co., Ltd.) | |

### (Measurement of Viscosity)

Regarding the chocolate mix of Example 8, viscosity immediately after preparation of the mix (viscosity before operation), viscosity after the addition of the water-containing material (viscosity after operation W), viscosity after the addition of the seeding agent (viscosity after operation S), and viscosity when maintaining a temperature of 34°C for 10 minutes after the addition of the seeding agent (viscosity after 10 minutes) were respectively measured. The results are shown in Table 13. The chocolate mix of Example 8 in which a high fructose corn syrup is not added was regarded as the chocolate mix of Comparative Example 3.

### (Evaluation of Releasing from Mold)

The chocolate mix immediately after the addition of the water-containing material and the seeding agent of Example 8 (immediately after operations W&S), and the chocolate mix of Comparative Example 3 were subjected to cooling solidification at 10°C for 15 minutes, and then releasing percentage (percentage of chocolate which is released from the mold) was evaluated in the same manner as in Example 6. The results are shown in Table 13.

### (Evaluation of Heat-Resistant Shape Retention 1: Measurement of Resistance to Stress under Load by Rheometer)

Regarding the chocolate gained by evaluation of releasing from mold, the chocolate released from the mold was stored at 20°C for 2 days, and then subjected to a heat-retaining step at 28°C for 0, 4, or 8 day(s). After the heat-retaining step, the chocolate was stored at 20°C. The chocolate from Comparative Example 3 was stored at 20°C for 2 days and then subjected to a heat-retaining step at 28°C for 4 days, followed by storage at 20°C. Regarding each chocolate, after storage at 34°C for 2 hours, resistance to stress under load was measured by a rheometer. Using a rheometer, resistance to stress under load (unit: g) was measured in the same manner as in the aforementioned [Confirmation of Effect of Heat-Retaining Step-1]. The results are shown in Table 13.

### (Evaluation of Heat-Resistant Shape Retention 2: n-Hexane Dipping Test)

Each chocolate subjected to evaluation of heat-resistant shape retention 1 was placed on a rhombus stainless steel net in which the long interval was 16 mm and the short interval was 8 mm, and each intersection angle was 60° and 120°, followed by dipping in n-hexane at room temperature, the shape after 48 hours was evaluated by the same criteria as in the aforementioned [Confirmation of Effect of Heat-Retaining Step-2]. The results are shown in Table 13.

**[Table 13]**

| Table 13. Manufacturing conditions and evaluation results of chocolate | | | | |
|---|---|---|---|---|
| | Comparative Example 3 | Example 8 | | |
| Chocolate mix | F | F | | |
| Chocolate mix temperature (°C) | 34 | 34 | | |
| Operation order*1 | S | S→W | | |
| Type of water-containing material | | High fructose corn syrup | | |
| Addition amount of water (relative to mix: % by mass) | | 1 | | |
| Seeding agent | B | B | | |
| β-form StOSt crystal content (relative to oil and fat in mix: % by mass) | 1.0 | 1.0 | | |
| Viscosity before operation(mPa·s) | 12500(34°C) | 12500(34°C) | | |
| Viscosity after operation W(mPa·s) | - | 26500(34°C) | | |
| Viscosity after operation S(mPa·s) | 12500(34°C) | 12500(34°C) | | |
| Viscosity after 10 minutes(mPa·s) | 12500(34°C) | 12750(34°C) | | |
| Releasing from mold(Immediately after operations W&S) | A | A | A | A |
| Period of storage at 28°C | 4 Days | 0 Day | 4 Days | 8 Days |
| Evaluation of heat-resistant shape retention 1(Unit:g) | Impossible to measure | 8 | 35 | 50 |
| Evaluation of heat-resistant shape retention 2 | C | A | A | A |
| *1: "Operation W" means an operation of adding a water-containing material, while "operation S" means an operation of adding a seeding agent. "W → S" means that a seedling agent was added after adding a water-containing material to a chocolate mix. | | | | |

As shown in Example 8 of Table 13, heat-resistant shape retention of the chocolate could be more enhanced with the lapse of time by providing the heat-retaining step. It was estimated that the heat-retaining step makes a saccharide skeleton formed in the chocolate stronger. Such an effect was not recognized in Comparative Example 3 in which a water-containing material (high fructose corn syrup) was not added.

### [Manufacture and Evaluation of White Chocolate-6]

### (Example 9)

According to the formulation in Table 14, raw materials were mixed and then subjected to roll refining and conching by ordinary methods to prepare a chocolate mix G having a temperature of 37°C in a molten state (oil and fat content of the chocolate mix: 33.0% by mass). To the chocolate mix G, a high fructose corn syrup (moisture content: 25% by mass) was added in an amount of 4% by mass (1% by mass as water relative to the chocolate mix) and, after dispersion with stirring, a seeding agent B was added in an amount of 1.35% by mass relative to the cholate mix (1.5% by mass as the β form StOSt crystal relative to the oils and fats in the chocolate mix in a molten state), followed by holding at 37°C while stirring.

**[Table 14]**

| Table 14. Formulation of chocolate mix G | |
|---|---|
| Unit: % by mass | |
| | Chocolate mix G |
| Cocoa butter | 17.33 |
| StOSt-containing oil and fat | 11.67 |
| Whole milk powder | 16.0 |
| Skim milk powder | 10.0 |
| Powdered sugar | 44.55 |
| Lecithin | 0.27 |
| PGPR*1 | 0.13 |
| Flavor | 0.05 |
| Total | 100.0 |
| Oil and fat content | 33.0 |
| SOS content in oil and fat | 72.5 |
| StOSt content in oil and fat | 39.1 |
| *1: Polyglycerol condensed ricinoleic acid ester | |
| (Trade name: Sunsoft No. 818SK as a product of Taiyo Kagaku Co., Ltd.) | |

### (Measurement of Viscosity)

Regarding the chocolate mix of Example 9, viscosity immediately after preparation of the mix (viscosity before operation), viscosity after the addition of the water-containing material (viscosity after operation W), viscosity after the addition of the seeding agent (viscosity after operation S), and viscosity when maintaining at the temperature of 37°C for 10 minutes after the addition of the seeding agent (viscosity after 10 minutes) were respectively measured. The results are shown in Table 15.

### (Evaluation of Releasing from Mold)

Immediately after the addition of the water-containing material and the seeding agent of Example 9 (immediately after operations W&S), the chocolate mix was subjected to cooling solidification at 10°C for 15 minutes, and then releasing percentage (percentage of chocolate which was released from the mold) was evaluated in the same manner as in Example 6. The results are shown in Table 15.

### (Evaluation of Heat-Resistant Shape Retention 1: Measurement of Resistance to Stress under Load by Rheometer)

Regarding the chocolate obtained by evaluation of releasing from mold, the chocolate released from a mold was stored at 20°C for 2 days, and then subjected to a heat-retaining step at 28°C for 0, 4, or 8 day(s). After the heat-retaining step, the chocolate was stored at 20°C. Regarding each chocolate, after storage at 34°C for 2 hours, resistance to stress under load was measured by a rheometer. Using a rheometer, resistance to stress under load (unit: g) was measured in the same manner as in the aforementioned [Confirmation of Effect of Heat-Retaining Step-1]. The results are shown in Table 15.

### (Evaluation of Heat-Resistant Shape Retention 2: n-Hexane Dipping Test)

Regarding the chocolate subjected to evaluation of heat-resistant shape retention 1, after dipping in n-Hexane, the shape after 48 hours was evaluated in the same manner as in Example 8. The results are shown in Table 15.

**[Table 15]**

| Table 15. Manufacturing conditions and evaluation results of chocolate | | | |
|---|---|---|---|
| | Example 9 | | |
| Chocolate mix | G | | |
| Chocolate mix temperature (°C) | 37 | | |
| Operation order*1 | W→S | | |
| Type of water-containing material | High fructose corn syrup | | |
| Addition amount of water (relative to mix: % by mass) | 1 | | |
| Seeding agent | B | | |
| β-form StOSt crystal content (relative to oil and fat in mix: % by mass) | 1.5 | | |
| Viscosity before operation(mPa·s) | 9000(37°C) | | |
| Viscosity after operation W(mPa·s) | 22000(37°C) | | |
| Viscosity after operation S(mPa·s) | 20000(37°C) | | |
| Viscosity after 10 minutes(mPa·s) | 20000(37°C) | | |
| Releasing from mold(Immediately after operations W&S) | A | A | A |
| Period of storage at 28°C | 0 Day | 4 Days | 8 Days |
| Evaluation of heat-resistant shape retention 1(Unit:g) | 104 | 234 | 289 |
| Evaluation of heat-resistant shape retention 2 | B | A | A |
| *1: "Operation W" means an operation of adding a water-containing material, while "operation S" means an operation of adding a seeding agent. "W → S" means that a seedling agent was added after adding a water-containing material to a chocolate mix. | | | |

As shown in Table 15, heat-resistant shape retention of the chocolate could be more enhanced with the lapse of time by providing the heat-retaining step. It was estimated that the heat-retaining step makes a saccharide skeleton formed in the chocolate stronger.

## Claims

1. A method for manufacturing a water-containing heat-resistant chocolate, which comprises:
a step of adding a seeding agent containing at least a β-form XOX crystal to a chocolate mix in a molten state at a temperature of 32 to 40°C, and
a step of adding water in an amount of 0.1 to 5.0% by mass to the chocolate mix,
wherein the β-form XOX crystal is an oil and fat crystal in which, in the determination of a short spacing at 2θ in a range of 17 to 26 degrees by X-ray diffraction, a strong diffraction peak corresponding to a spacing of 4.5 to 4.7Å is detected and a diffraction peak corresponding to a spacing of 4.1 to 4.3Å and a diffraction peak corresponding to a spacing of 3.8 to 3.9Å are not detected or are very weak,
and wherein X represents a saturated fatty acid having 18-22 carbon atoms, O represents oleic acid, and XOX represents triacylglycerol in which oleic acid is bonded to the 2-position of glycerol, and X is bonded to the 1- and 3-positions,
which further includes, after the seeding agent addition step and the water addition step, a holding step of holding the temperature of the chocolate mix at 32 to 40°C for 10 minutes or more.

2. The method for manufacturing a water-containing heat-resistant chocolate according to claim 1, wherein the chocolate mix in a molten state includes 40 to 90% by mass of SOS in oil and fat in the chocolate mix in a molten state,
wherein S represents a saturated fatty acid having 16-22 carbon atoms, O represents oleic acid, and SOS represents triacylglycerol in which oleic acid is bonded to the 2-position of glycerol and S is bonded to the 1- and 3-positions.

3. The method for manufacturing a water-containing heat-resistant chocolate according to claim 1 or 2, wherein the chocolate mix in a molten state includes 24 to 70% by mass of StOSt in an oil and fat in the chocolate mix in a molten state.

4. The method for manufacturing a water-containing heat-resistant chocolate according to any one of claims 1 to 3, wherein, in the seeding agent addition step, 0.1 to 15% by mass of the β-form XOX crystal is added relative to the oil and fat in the chocolate mix in a molten state.

5. The method for manufacturing a water-containing heat-resistant chocolate according to any one of claims 1 to 4, wherein the β-form XOX crystal is a β-form BOB crystal and/or a β-form StOSt crystal,
wherein BOB represents 1,3-dibehenyl-2-oleoylglycerol and StOSt represents 1,3-distearoyl-2-oleoylglycerol.

6. The method for manufacturing a water-containing heat-resistant chocolate according to any one of claims 1 to 4, wherein the β-form XOX crystal is a β-form StOSt crystal.

7. The method for manufacturing a water-containing heat-resistant chocolate according to any one of claims 1 to 6, further including, after the seeding agent addition step and water addition step, a cooling solidification step of subjecting the chocolate mix to cooling solidification to obtain chocolate.

8. The method for manufacturing a water-containing heat-resistant chocolate according to claim 7, which further includes, after the cooling solidification step, a heat-retaining step of subjecting the chocolate to a heat-retaining treatment.

9. The method for manufacturing the water-containing heat-resistant chocolate according to any one of claims 1 to 8, wherein the water-containing heat-resistant chocolate has a StOSt content in an oil and fat of 24 to 70% by mass, and shape collapse does not occur for 20 minutes or more after dipping in hexane at 20°C.

10. A method for suppressing an increase in viscosity of a water-containing chocolate mix, which comprises adding a β-form XOX crystal to a chocolate mix in a molten state having a temperature of 32 to 40°C, and adding water in an amount of 0.1 to 5.0% by mass to the chocolate mix,
wherein the β-form XOX crystal is an oil and fat crystal in which, in the determination of a short spacing at 2θ in a range of 17 to 26 degrees by X-ray diffraction, a strong diffraction peak corresponding to a spacing of 4.5 to 4.7Å is detected and a diffraction peak corresponding to a spacing of 4.1 to 4.3Å and a diffraction peak corresponding to a spacing of 3.8 to 3.9Å are not detected or are very weak.

11. The method for suppressing an increase in viscosity of a water-containing chocolate mix according to claim 10, wherein the β-form XOX crystal is added and also water is added, and then the viscosity of the chocolate mix is suppressed to 1.10 times or less of the viscosity of the chocolate mix when the β-form XOX crystal and the water are added.

12. A method for forming a saccharide skeleton in a water-containing heat-resistant chocolate mix, which comprises adding a β-form XOX crystal to a chocolate mix in a molten state at a temperature of 32 to 40°C, adding water in an amount of 0.1 to 5.0% by mass to the chocolate mix, and, then subjecting chocolate to a heat-retaining treatment,
wherein the β-form XOX crystal is an oil and fat crystal in which, in the determination of a short spacing at 2θ in a range of 17 to 26 degrees by X-ray diffraction, a strong diffraction peak corresponding to a spacing of 4.5 to 4.7Å is detected and a diffraction peak corresponding to a spacing of 4.1 to 4.3Å and a diffraction peak corresponding to a spacing of 3.8 to 3.9Å are not detected or are very weak.

## Patentansprüche

1. Verfahren zur Herstellung einer wasserhaltigen, wärmebeständigen Schokolade, wobei das Verfahren umfasst:
einen Schritt der Zugabe eines keimbildenden Mittels enthaltend zumindest einen XOX-Kristall in β-Form zu einer Schokolademischung in einem geschmolzenen Zustand bei einer Temperatur von 32 bis 40 °C, und
einen Schritt der Zugabe von Wasser in einer Menge von 0,1 bis 5,0 Massen-% zu der Schokolademischung,
wobei der XOX-Kristall in β-Form ein Öl- und Fettkristall ist, bei dem bei der Bestimmung eines kurzen Abstands bei 2θ in einem Bereich von 17 bis 26 Grad durch Röntgenbeugung eine starke Beugungsspitze entsprechend einem Abstand von 4,5 bis 4,7 Å erfasst wird und eine Beugungsspitze entsprechend einem Abstand von 4,1 bis 4,3 Å und eine Beugungsspitze entsprechend einem Abstand von 3,8 bis 3,9 Å nicht oder sehr schwach erfasst wird,
und wobei X für eine gesättigte Fettsäure mit 18 - 22 Kohlenstoffatomen steht, O für Ölsäure steht, und XOX für Triacylglycerin steht, bei dem Ölsäure an die 2-Position von Glycerin gebunden ist, und X an die 1- und 3-Positionen gebunden ist, und wobei das Verfahren nach dem Schritt der Zugabe des keimbildendenden Mittels und dem Schritt der Zugabe des Wassers ferner einen Halteschritt beinhaltet, bei dem die Temperatur der Schokolademischung für 10 Minuten oder mehr auf 32 bis 40 °C gehalten wird.

2. Verfahren zur Herstellung einer wasserhaltigen, wärmebeständigen Schokolade nach Anspruch 1, wobei die Schokolademischung in einem geschmolzenen Zustand wasserhaltigen, wärmebeständigen Schokolade 40 bis 90 Massen-% SOS in Öl und Fett in der Schokolademischung in einem geschmolzenen Zustand enthält, wobei S für eine gesättigte Fettsäure mit 16 - 22 Kohlenstoffatomen steht, O für Ölsäure steht, und SOS für Triacylglycerin steht, bei dem Ölsäure an die 2-Position von Glycerin gebunden ist, und S an die 1- und 3-Positionen gebunden ist.

3. Verfahren zur Herstellung einer wasserhaltigen, wärmebeständigen Schokolade nach Anspruch 1 oder 2, wobei die Schokolademischung in einem geschmolzenen Zustand 24 bis 70 Massen-% StOSt in einem Öl und Fett in der Schokolademischung in einem geschmolzenen Zustand beinhaltet.

4. Verfahren zur Herstellung einer wasserhaltigen, wärmebeständigen Schokolade nach einem der Ansprüche 1 bis 3, wobei in dem Schritt zur Zugabe des keimbildenden Mittels 0,1 bis 15 Massen-% des XOX-Kristalls in β-Form relativ zu dem Öl und Fett in der Schokolademischung in einem geschmolzenen Zustand hinzugefügt wird.

5. Verfahren zur Herstellung einer wasserhaltigen, wärmebeständigen Schokolade nach einem der Ansprüche 1 bis 4, wobei der XOX-Kristall in β-Form BOB-Kristall in β-Form und/oder ein StOSt-Kristall in β-Form ist,
wobei BOB für 1,3-Dibehenyl-2-oleoylglycerin steht und StOSt für 1,3-distearoyl-2-oleoylglycerin steht.

6. Verfahren zur Herstellung einer wasserhaltigen, wärmebeständigen Schokolade nach einem der Ansprüche 1 bis 4, wobei der XOX-Kristall in β-Form ein StOSt-Kristall in β-Form ist.

7. Verfahren zur Herstellung einer wasserhaltigen, wärmebeständigen Schokolade nach einem der Ansprüche 1 bis 6, ferner enthaltend, nach dem Schritt der Zugabe des keimbildenden Mittels und nach dem Schritt der Zugabe von Wasser, einen Kühlungs-Verfestigungsschritt, bei dem die Schokolademischung einer Kühlungs-Verfestigung unterzogen wird, um Schokolade zu erhalten.

8. Verfahren zur Herstellung einer wasserhaltigen, wärmebeständigen Schokolade nach Anspruch 7, welche ferner nach dem Kühlungs-Verfestigungsschritt einen Wärmerückhalteschritt beinhaltet, bei dem die Schokolade einer Wärmerückhaltebehandlung unterzogen wird.

9. Verfahren zur Herstellung der wasserhaltigen, wärmebeständigen Schokolade nach einem der Ansprüche 1 bis 8, wobei die wasserhaltige, wärmebeständige Schokolade einen StOSt-Gehalt in einem Öl und Fett von 24 bis 70 Massen-% enthält, und nach Eintauchen in Hexan bei 20 °C 20 Minuten lang kein Formkollaps auftritt.

10. Verfahren zur Unterdrückung einer Zunahme in der Viskosität einer wasserhaltigen Schokolademischung, wobei das Verfahren das Zugeben eines XOX-Kristalls in β-Form zu einer Schokolademischung in einem geschmolzenen Zustand mit einer Temperatur von 32 bis 40 °C und das Zugeben von Wasser in einer Menge von 0,1 bis 5,0 Massen-% zu der Schokolademischung umfasst, wobei der XOX-Kristall in β-Form ein Öl- und Fettkristall ist, bei dem bei der Bestimmung eines kurzen Abstands bei 2θ in einem Bereich von 17 bis 26 Grad durch Röntgenbeugung eine starke Beugungsspitze entsprechend einem Abstand von 4,5 bis 4,7 Å erfasst wird und eine Beugungsspitze entsprechend einem Abstand von 4,1 bis 4,3 Å und eine Beugungsspitze entsprechend einem Abstand von 3,8 bis 3,9 Ä nicht oder sehr schwach erfasst wird.

11. Verfahren zur Unterdrückung einer Zunahme in der Viskosität einer wasserhaltigen Schokolademischung nach Anspruch 10, wobei der XOX-Kristall in β-Form hinzugefügt wird und auch Wasser hinzugefügt wird, und anschließend die Viskosität der Schokolademischung auf das 1,10-Fache oder weniger der Viskosität der Schokolademischung unterdrückt wird, wenn der XOX-Kristall in β-Form und das Wasser hinzugefügt werden.

12. Verfahren zur Bildung eines Saccharid-Skeletts in einer wasserhaltigen, wärmebeständigen Schokolademischung, wobei das Verfahren das Zugeben eines XOX-Kristalls in β-Form zu einer Schokolademischung in einem geschmolzenen Zustand bei einer Temperatur von 32 bis 40 °C, das Zugeben von Wasser in einer Menge von 0,1 bis 5,0 Massen-% zu der Schokolademischung, und anschließend das Unterziehen der Schokolade einer Wärmerückhaltebehandlung umfasst, wobei der XOX-Kristall in β-Form ein Öl- und Fettkristall ist, bei dem bei der Bestimmung eines kurzen Abstands bei 2θ in einem Bereich von 17 bis 26 Grad durch Röntgenbeugung eine starke Beugungsspitze entsprechend einem Abstand von 4,5 bis 4,7 Å erfasst wird und eine Beugungsspitze entsprechend einem Abstand von 4,1 bis 4,3 Å und eine Beugungsspitze entsprechend einem Abstand von 3,8 bis 3,9 Å nicht oder sehr schwach erfasst wird.

## Revendications

1. Procédé de fabrication d'un chocolat résistant à la chaleur contenant de l'eau, qui comprend :
une étape consistant à ajouter un agent d'ensemencement contenant au moins un cristal XOX à forme β à un mélange de chocolat à l'état fondu à une température allant de 32 à 40°C, et
une étape consistant à ajouter de l'eau en une quantité allant de 0,1 à 5,0% en masse au mélange de chocolat,
dans lequel le cristal XOX à forme β est un cristal d'huile et de matière grasse dans lequel, dans la détermination d'un espacement court à 2θ dans une plage allant de 17 à 26 degrés par diffraction des rayons X, un pic de diffraction élevé correspondant à un espacement allant de 4,5 à 4,7 Å est détecté et un pic de diffraction correspondant à un espacement allant de 4,1 à 4,3 Å et un pic de diffraction correspondant à un espacement allant de 3,8 à 3,9 Å ne sont pas détectés ou sont très faibles,
et dans lequel X représente un acide gras saturé ayant 18 à 22 atomes de carbone, O représente l'acide oléique, et XOX représente le triacylglycérol dans lequel l'acide oléique est lié à la position 2 du glycérol, et X est lié aux positions 1 et 3,
qui comporte en outre, après l'étape d'ajout d'agent d'ensemencement et l'étape d'ajout de l'eau, une étape de maintien consistant à maintenir la température du mélange de chocolat entre 32 et 40°C pendant 10 minutes ou plus.

2. Le procédé de fabrication d'un chocolat résistant à la chaleur contenant de l'eau selon la revendication 1, dans lequel le mélange de chocolat à l'état fondu comporte 40 à 90% en masse de SOS dans l'huile et la matière grasse dans le mélange de chocolat à l'état fondu,
dans lequel S représente un acide gras saturé ayant 16 à 22 atomes de carbone, O représente l'acide oléique, et SOS représente le triacylglycérol dans lequel l'acide oléique est lié à la position 2 du glycérol et S est lié aux positions 1 et 3.

3. Le procédé de fabrication d'un chocolat résistant à la chaleur contenant de l'eau selon la revendication 1 ou 2, dans lequel le mélange de chocolat à l'état fondu comporte 24 à 70% en masse de StOSt dans une huile et une matière grasse dans le mélange de chocolat à l'état fondu.

4. Le procédé de fabrication d'un chocolat résistant à la chaleur contenant de l'eau selon l'une quelconque des revendications 1 à 3, dans lequel, lors de l'étape d'ajout d'agent d'ensemencement, 0,1 à 15% en masse du cristal XOX à forme β est ajouté par rapport à l'huile et la matière grasse dans le mélange de chocolat à l'état fondu.

5. Le procédé de fabrication d'un chocolat résistant à la chaleur contenant de l'eau selon l'une quelconque des revendications 1 à 4, dans lequel le cristal XOX à forme β est un cristal BOB à forme β et/ou un cristal StOSt à forme β,
dans lequel BOB représente le 1,3-dibéhényl-2-oléoylglycérol et StOSt représente le 1,3-distéaroyl-2-oléoylglycérol.

6. Le procédé de fabrication d'un chocolat résistant à la chaleur contenant de l'eau selon l'une quelconque des revendications 1 à 4, dans lequel le cristal XOX à forme β est un cristal StOSt à forme β.

7. Le procédé de fabrication d'un chocolat résistant à la chaleur contenant de l'eau selon l'une quelconque des revendications 1 à 6, comportant en outre, après l'étape d'ajout d'agent d'ensemencement et l'étape d'ajout de l'eau, une étape de solidification par refroidissement consistant à soumettre le mélange de chocolat à une solidification par refroidissement pour obtenir du chocolat.

8. Le procédé de fabrication d'un chocolat résistant à la chaleur contenant de l'eau selon la revendication 7, qui comporte en outre, après l'étape de solidification par refroidissement, une étape de conservation de chaleur consistant à soumettre le chocolat à un traitement de conservation de chaleur.

9. Le procédé de fabrication du chocolat résistant à la chaleur contenant de l'eau selon l'une quelconque des revendications 1 à 8, dans lequel le chocolat résistant à la chaleur contenant de l'eau a une teneur en StOSt dans une huile et une matière grasse allant de 24 à 70% en masse, et l'affaissement de la forme ne se produit pas pendant 20 minutes ou plus après un trempage dans de l'hexane à 20°C.

10. Procédé de suppression d'une augmentation de la viscosité d'un mélange de chocolat contenant de l'eau, qui comprend le fait d'ajouter un cristal XOX à forme β à un mélange de chocolat à l'état fondu ayant une température allant de 32 à 40°C, et d'ajouter de l'eau en une quantité allant de 0,1 à 5,0% en masse au mélange de chocolat,
dans lequel le cristal XOX à forme β est un cristal d'huile et de matière grasse où, dans la détermination d'un espacement court à 2θ dans une plage allant de 17 à 26 degrés par diffraction des rayons X, un pic de diffraction élevé correspondant à un espacement allant de 4,5 à 4,7 Å est détecté, et un pic de diffraction correspondant à un espacement allant de 4,1 à 4,3 Å et un pic de diffraction correspondant à un espacement allant de 3,8 à 3,9 Å ne sont pas détectés ou sont très faibles.

11. Le procédé de suppression d'une augmentation de la viscosité d'un mélange de chocolat contenant de l'eau selon la revendication 10, dans lequel le cristal XOX à forme β et également de l'eau sont ajoutés, puis la viscosité du mélange de chocolat est réduite à 1,10 fois ou moins de la viscosité du mélange de chocolat lorsque le cristal XOX à forme β et l'eau sont ajoutés.

12. Procédé de formation d'un squelette de saccharide dans un mélange de chocolat résistant à la chaleur contenant de l'eau, qui comprend le fait d'ajouter un cristal XOX à forme β à un mélange de chocolat à l'état fondu à une température allant de 32 à 40°C, d'ajouter de l'eau en une quantité allant de 0,1 à 5,0% en masse au mélange de chocolat, puis de soumettre le chocolat à un traitement de conservation de chaleur,
dans lequel le cristal XOX à forme β est un cristal d'huile et de matière grasse dans lequel, dans la détermination d'un espacement court à 2θ dans une plage allant de 17 à 26 degrés par diffraction des rayons X, un pic de diffraction élevé correspondant à un espacement allant de 4,5 à 4.7 Å est détecté et un pic de diffraction correspondant à un espacement allant de 4,1 à 4,3 Å et un pic de diffraction correspondant à un espacement allant de 3,8 à 3,9 Å ne sont pas détectés ou sont très faibles.
